# EUROPÄISCHE PATENTSCHRIFT

(11) **EP 1 426 335 B1**
(45) Veröffentlichungstag und Bekanntmachung des Hinweises auf die Patenterteilung: **27.04.2016**
(21) Anmeldenummer: 03026497.2
(22) Anmeldetag: 21.11.2003
(51) Int. Cl.: C01G 23/053

(54) **Verfahren zur Oxidation von Ti3+ zu Ti4+ bei der Herstellung von Titandioxid nach dem Sulfatverfahren**
Process for the oxidation of Ti3+ to Ti4+ during titanium dioxide preparation according to the sulphate process
Procédé pour l'oxidation de Ti3+ á Ti4+ pendant la préparation de dioxyde de titane par le procédé au sulfate

(30) Priorität: 27.11.2002 DE 10255262
(43) Veröffentlichungstag der Anmeldung: 09.06.2004
(73) Patentinhaber: Sachtleben Chemie GmbH, 47198 Duisburg (DE)
(72) Erfinder: Kretschmer, Matthias, Dr., 47445 Moers (DE); Derler, Fritz, 47495 Rheinberg (DE)
(74) Vertreter: Nobbe, Matthias

(56) Entgegenhaltungen:
- DE-B- 1 052 378
- US-A- 2 589 909
- US-A- 2 953 434

## Beschreibung

Die Erfindung betrifft ein Verfahren zur Oxidation von Ti³⁺ zu Ti⁴⁺ bei der Herstellung von Titandioxid nach dem Sulfatverfahren.

Bei der Herstellung von Titandioxid nach dem Sulfatverfahren werden titandioxidhaltige Rohstoffe (Schlacke, Ilmenit) getrocknet und gemahlen und anschließend mit konzentrierter Schwefelsäure aufgeschlossen. Die Reaktion zwischen den Rohstoffen und der konzentrierten Schwefelsäure wird chargenweise in ausgemauerten Reaktionskesseln durchgeführt. Bei der Aufschlussreaktion werden nahezu alle in den Rohstoffen vorhandene Elementoxide, die mit Schwefelsäure reagieren, in die entsprechenden Metallsulfate umgewandelt. Nach der Reaktion verbleibt eine feste Masse (Aufschlusskuchen), die mit Wasser und/oder verdünnter Schwefelsäure gelöst wird.

Während der Reaktionsphase und dem nachfolgenden Lösen wird in die Reaktionskessel von unten Luft eingeblasen, um damit den Behälterinhalt zu rühren, da eine mechanische Rührung wegen der Erstarrung der Reaktionsmasse nicht möglich ist.

Die Aufschlusslösung wird durch Sedimentations- und Filtrationsprozesse vollständig von den ungelösten Bestandteilen (Aufschlussrückstände, Gangart) befreit. Im weiteren Prozess wird aus der feststofffreien Aufschlusslösung durch Hydrolyse eine Metatitansäuresuspension hergestellt. Die Metatitansäure wird nach Waschung, Bleichung und gegebenenfalls Salzbehandlung sowie Filtration in einem Drehrohrofen kalziniert.

Der titandioxidhaltige Rohstoff Schlacke enthält bis zu 85 Gew.-% Titandioxid, wovon aufgrund des Herstellungsprozesses bis zu 25 Gew.-% als Ti(III)-Oxid (gerechnet als TiO₂) vorliegt. (Die Angaben in Gew.-% für eine Ti-Verbindung sind hier immer als in Gew.-% TiO₂ umgerechnet zu verstehen.) Nach der Umsetzung mit konzentrierter Schwefelsäure und dem anschließenden Lösen des Aufschlusskuchens, finden sich in der Lösung beträchtliche Konzentrationen an gelöstem Titan(III)-Sulfat (umgerechnet bis zu 25 g TiO₂ pro Liter Lösung bei einer Gesamt-TiO₂-Konzentration von ca. 230 g/l).

Da das gelöste Titan(III)-Sulfat während der Hydrolyse nicht ausgefällt wird, sondern in Lösung verbleibt und so mit dem Filtrat der Metatitansäuresuspension abgetrennt wird, entsteht ein entsprechender Ausbeuteverlust bezogen auf den Gesamtgehalt an Titan in der Aufschlusslösung. Um diesen Ausbeuteverlust zu verringern oder zu vermeiden, wird am Ende des Lösevorgangs ein geringerer Gehalt an Titan(III)-Sulfat angestrebt, z.B. von 1,0 bis 1,5 g TiO₂/l. Ein geringer Restgehalt an Ti³⁺ ist dabei allerdings erwünscht, damit während der nachfolgenden Prozessschritte (wie Klärung, Filtration und Hydrolyse), bei denen der Zutritt von Luft nicht verhindert werden kann, das ebenfalls in der Aufschlusslösung vorhandene Eisen(II)-Sulfat nicht durch Luftsauerstoff zu Eisen(III)-Sulfat, das als Verunreinigung in der ausgefällten Metatitansäure verbleibt, oxidiert wird.

Ein Teil des Titan(III)-Gehaltes in der Aufschlusslösung wird bereits während des Lösevorgangs durch den Sauerstoff der Rührluft zu Titan(IV)-Sulfat oxidiert. Die Geschwindigkeit dieser Reaktion schwankt jedoch von Charge zu Charge und ist nur in geringem Maße über die Rührluftmenge beeinflussbar. Somit führt ein verzögerter Abbau des Titan(III)-Gehaltes zu einer nicht planbaren Verlängerung der Chargenzeiten und damit zu einer Beeinträchtigung der maximalen Aufschlusskesselkapazität. Generell von Nachteil der Oxidation von Ti³⁺ zu Ti⁴⁺ mit Rührluft ist das für diese Reaktion (kinetisch bedingte) unzureichende Oxidationsvermögen der Rührluft.

Es sind mehrere Möglichkeiten bekannt, den Abbau des Ti(III)-Gehaltes zu beeinflussen. So ist es zum Beispiel möglich, ein Gemisch aus den Rohstoffen Schlacke und Ilmenit gemeinsam aufzuschließen, wobei ein Teil des aus der Schlacke freiwerdenden Ti(III)-Sulfates durch das aus dem Ilmenit freiwerdende Eisen(III)-Sulfat zu Titan(IV)-Sulfat oxidiert wird. Diesem Vorgehen sind jedoch Grenzen gesetzt, da zum einen Schlacke und Ilmenit nur in einem eng begrenzten Mischungsverhältnis zur Reaktion gebracht werden können und zum anderen nicht der gesamte Anteil des im Ilmenit gebundenen Eisens als dreiwertiges Eisen vorliegt. Zudem ist der Eisen(III)-Gehalt des Ilmenits abhängig von seiner Lagerstätte und bei Abbau und Aufbereitung nicht steuerbar.

Weiterhin ist es möglich, jeweils Aufschlüsse nur mit Schlacke und Aufschlüsse nur mit Ilmenit anzusetzen und durch anschließendes Mischen der Aufschlusslösungen den Ti(III)-Gehalt in dem zu hydrolysierenden Gemisch einzustellen. Nachteilig dabei ist, dass der Titan(III)-Gehalt in der Schlackeaufschlusslösung ebenfalls nicht reproduzierbar einstellbar ist. Dies führt in der Mischung zu schwankenden Gehalten an Titan(IV)-Sulfat, sowie an Eisen(II)-Sulfat und beeinflusst schließlich den nachfolgenden Prozess der Hydrolyse.

Die Oxidation von Ti³⁺ zu Ti⁴⁺ mittels Nitraten oder Chloraten führt zu unerwünschten Fremdbestandteilen in der Lösung und ist deshalb nicht praktikabel.

Schließlich wird in der US 4325920 vorgeschlagen, den Abbau des Titan(III)-Gehaltes durch Zugabe von oberflächenaktiven organischen Substanzen, wie z.B. Ligninsulfonat zu beschleunigen. Der Nachteil dieses Verfahrens liegt darin, dass bei diesem Verfahren ebenfalls nicht reproduzierbare Abbaugeschwindigkeiten erzielt werden, da das Ligninsulfonat bereits vor der Reaktion zugegeben wird. So kann z.B. der Gehalt an Titan(III)-Sulfat bereits während des Lösevorgangs vollständig abgebaut werden, was durch nachfolgende Zugabe von Reduktionsmitteln korrigiert werden muss.

Der Einsatz von Wasserstoffperoxid als Mittel zur Oxidation von Ti³⁺ zu Ti⁴⁺ wird in US 2953434, US 2589909 und DE 1052378 erwähnt.

Aufgabe der Erfindung ist es, die Nachteile des Standes der Technik zu überwinden und insbesondere ein Verfahren zur Oxidation von Ti³⁺ zu Ti⁴⁺ bei der Herstellung von Titandioxid nach dem Sulfatverfahren zu schaffen, bei dem der Abbau von Titan(III)-Sulfat auf einfache Weise durchgeführt und genau gesteuert werden kann.

Gelöst wird die Aufgabe durch ein Verfahren zur Herstellung von Titandioxid nach dem Sulfatverfahren, bei dem ein titanhaltiger Rohstoff mit Schwefelsäure aufgeschlossen wird, der erhaltene Aufschlusskuchen mit Wasser und/oder verdünnter Schwefelsäure gelöst wird und die nach einer Lösungszeit von 2 bis 10 Stunden erhaltene Aufschlusslösung mit einer Wasserstoffperoxidlösung behandelt wird, wobei das gelöste Ti³⁺ zu Ti⁴⁺ oxidiert wird. Als Beginn der Lösungszeit wird gerechnet der Beginn der Zuführung des Lösewassers, bzw. der verdünnten Schwefelsäure zur Aufschlussmasse, und als Ende der Lösungszeit wird gerechnet der Beginn des Abpumpens der Aufschlusslösung.

Obwohl sich Wasserstoffperoxid H₂O₂ bei hohen Temperaturen und erst recht unter Anwesenheit von Metallionen katalytisch zersetzt, wurde überraschenderweise gefunden, dass nur eine geringe Menge des zugegebenen Wasserstoffperoxids durch die in der Aufschlusslösung vorhandenen Metallionen katalytisch zu Wasser und Sauerstoff zersetzt wird, die überwiegende Menge des zugegebenen Wasserstoffperoxids zur Oxidation von Ti³⁺ zu Ti⁴⁺ zur Verfügung steht und entgegen den Erwartungen keine übermäßige (und gefährliche) Gasentwicklung (durch Zersetzung des Wasserstoffperoxids) festzustellen ist.

Beispielhaft kann das erfindungsgemäße Verfahren folgendermaßen durchgeführt werden:
Der titandioxidhaltige Rohstoffe (Schlacke, Ilmenit) wird getrocknet und gemahlen und anschließend mit konzentrierter Schwefelsäure aufgeschlossen. Die exotherme Aufschlussreaktion wird bevorzugt chargenweise in ausgemauerten Reaktionskesseln durchgeführt. Die nach der Reaktion verbleibende feste Masse (Aufschlusskuchen) wird mit Wasser und/oder verdünnter Schwefelsäure gelöst. Zum Rühren der Mischung wird bevorzugt Luft eingeblasen. Nach einer Lösungszeit von 2 bis 10 Stunden, bevorzugt 4 bis 8 Stunden, wird die Wasserstoffperoxidlösung in das Reaktionsgefäß gegeben. Dabei wird die Wasserstoffperoxidlösung bevorzugt portionsweise zugegegeben. Die Konzentration der Wasserstoffperoxidlösung beträgt bevorzugt 10 bis 50 Gew.-%, besonders bevorzugt 20 bis 30 Gew.-%. Die Temperatur der Aufschlusslösung beträgt vor der Zugabe der Wasserstoffperoxidlösung bevorzugt 50 bis 90 °C, besonders bevorzugt 60 bis 80 °C. Die benötigte Menge Wasserstoffperoxid kann anhand der in der Aufschlusslösung bestimmen Menge Ti³⁺ berechnet werden. Dabei ist bevorzugt eine gewisse Restmenge Ti³⁺ zu berücksichtigen, die nach erfolgter Oxidation in der Aufschlusslösung verbleiben soll, z.B. umgerechnet 0,5 bis 3 g TiO₂ pro Liter Lösung, bevorzugt 1,0 bis 1,5 g TiO₂/l.

Der Gegenstand der Erfindung wird anhand der folgenden Ausführungsbeispiele näher erläutert:

### Vergleichsbeispiel: Lösen eines Aufschlusskuchens mit verdünnter Schwefelsäure und anschließender Behandlung mit Luft ohne weiteres Oxidationsmittel

In einem Aufschlusskessel wurde die Reaktionsmasse aus der Reaktion von konzentrierter Schwefelsäure mit 36 to einer Schlacke/Ilmenit-Mischung (Ti(III)-Gehalt der Schlacke: umgerechnet 17,5 % TiO₂) mit verdünnter Schwefelsäure gelöst und Rührluft zugegeben. Zwei Stunden nach Beginn der Lösezeit wurde in der Aufschlusslösung ein Ti(III)-Gehalt von umgerechnet 22,4 g TiO₂/l bestimmt. Nach weiteren zwei Stunden, während derer der Behälter mit 2000 m³/h Rührluft beaufschlagt wurde, betrug der Ti(III)-Gehalt umgerechnet 13,2 g TiO₂/l. Erst nach weiteren vier Stunden war der Ti(III)-Gehalt auf umgerechnet 2,5 g TiO₂/l abgebaut.

### Beispiel 1: Lösen eines Aufschlusskuchens mit verdünnter Schwefelsäure und anschließender Behandlung mit Wasserstoffperoxid

In einem Aufschlusskessel wurde die Reaktionsmasse aus der Reaktion von konzentrierter Schwefelsäure mit 36 to einer Schlacke/Ilmenit-Mischung (Ti(III)-Gehalt der Schlacke: umgerechnet 17,5 % TiO₂) mit verdünnter Schwefelsäure gelöst und Rührluft zugegeben. Zwei Stunden nach Beginn der Lösezeit wurde in der Aufschlusslösung ein Ti(III)-Gehalt von umgerechnet 19,4 g TiO₂/l bestimmt. Nach weiteren drei Stunden wurden insgesamt 730 I 50 %-ige Wasserstoffperoxidlösung (im Volumenverhältnis 1:1 mit Wasser zu ca. 1460 I einer ca. 25 %-igen Lösung verdünnt) in mehreren Teilmengen zugeben, wobei weiterhin mit Luft gerührt wurde. Nach jeder Zugabe wurde erneut der Ti(III)-Gehalt bestimmt. Nach vollständiger Zugabe betrug der Ti(III)-Gehalt umgerechnet 3,6 g TiO₂/l. Die Ausbeute bezogen auf Wasserstoffperoxid betrug ca. 96 %.

## Patentansprüche

1. Verfahren zur Herstellung von Titandioxid nach dem Sulfatverfahren, bei dem ein titanhaltiger Rohstoff mit Schwefelsäure aufgeschlossen wird und der erhaltene Aufschlusskuchen mit Wasser und/oder verdünnter Schwefelsäure gelöst wird **dadurch gekennzeichnet, dass** nach einer Lösungszeit von 2 bis 10 Stunden die erhaltene Aufschlusslösung mit einer Wasserstoffperoxidlösung behandelt wird, wobei das gelöste Ti³⁺ zu Ti⁴⁺ oxidiert wird.

2. Verfahren nach Anspruch 1, **dadurch gekennzeichnet, dass** die erhaltene Aufschlusslösung nach einer Lösungszeit von 4 bis 8 Stunden mit einer Wasserstoffperoxidlösung behandelt wird.

3. Verfahren nach Anspruch 1 oder 2, **dadurch gekennzeichnet, dass** eine 10 bis 50 %-ige Wasserstoffperoxidlösung eingesetzt wird.

4. Verfahren nach einem der Ansprüche 1 bis 3, **dadurch gekennzeichnet, dass** eine 20 bis 30 %-ige Wasserstoffperoxidlösung eingesetzt wird.

5. Verfahren nach einem der Ansprüche 1 bis 4, **dadurch gekennzeichnet, dass** die Reaktionsmischung mit eingeblasener Luft gerührt wird.

6. Verfahren nach einem der Ansprüche 1 bis 5, **dadurch gekennzeichnet, dass** die Wasserstoffperoxidlösung portionsweise zugegegeben wird.

7. Verfahren nach einem der Ansprüche 1 bis 6, **dadurch gekennzeichnet, dass** die Temperatur der Aufschlusslösung vor der Zugabe der Wasserstoffperoxidlösung 50 bis 90 °C beträgt.

8. Verfahren nach Anspruch 7, **dadurch gekennzeichnet, dass** die Temperatur der Aufschlusslösung vor der Zugabe der Wasserstoffperoxidlösung 60 bis 80 °C beträgt.

## Claims

1. A process for the production of titanium dioxide by the sulfate process, wherein a titanium-containing raw material is digested with sulfuric acid and the resulting digestion cake is dissolved with water and/or dilute sulfuric acid, **characterized in that** the obtained digestion solution is treated with a hydrogen peroxide solution after a solving time of 2 to 10 hours, whereby the dissolved Ti³⁺ is oxidized to Ti⁴⁺.

2. The process according to claim 1, **characterized in that** the obtained digestion solution is treated with hydrogen peroxide solution after a solving time of 4 to 8 hours.

3. The process according to claim 1 or 2, **characterized in that** a 10 to 50% hydrogen peroxide solution is used.

4. The process according to one of the claims 1 to 3, **characterized in that** a 20 to 30% hydrogen peroxide solution is used.

5. The process according to one of the claims 1 to 4, **characterized in that** the reaction mixture is stirred with injected air.

6. The process according to one of the claims 1 to 5, **characterized in that** the hydrogen peroxide solution is added portion-wise.

7. The process according to one of the claims 1 to 6, **characterized in that** the temperature of the digestion solution is 50 to 90 °C before addition of the hydrogen peroxide solution.

8. The process according to claim 7, **characterized in that** the temperature of the digestion solution is 60 to 80 °C before addition of the hydrogen peroxide solution.

## Revendications

1. Procédé de préparation de dioxyde de titane par le procédé au sulfate, pendant lequel une matière première titanifère est attaquée avec de l'acide sulfurique et le gâteau d'attaque obtenu est dissous avec de l'eau et/ou de l'acide sulfurique dilué, **caractérisé en ce que**, après une période de dissolution allant de 2 à 10 heures, la solution d'attaque obtenue est traitée avec une solution de peroxyde d'hydrogène, le Ti³⁺ dissous étant oxydé en Ti⁴⁺.

2. Procédé selon la revendication 1, **caractérisé en ce que** la solution d'attaque obtenue après une période de dissolution allant de 4 à 8 heures est traitée avec une solution de peroxyde d'hydrogène.

3. Procédé selon la revendication 1 ou 2, **caractérisé en ce qu'**une solution de peroxyde d'hydrogène de 10 à 50 % est utilisée.

4. Procédé selon l'une des revendications 1 à 3, **caractérisé en ce qu'**une solution de peroxyde d'hydrogène de 20 à 30 % est utilisée.

5. Procédé selon l'une des revendications 1 à 4, **caractérisé en ce que** le mélange réactionnel est agité à l'aide d'un barbotage d'air.

6. Procédé selon l'une des revendications 1 à 5, **caractérisé en ce que** la solution de peroxyde d'hydrogène est ajoutée par portions.

7. Procédé selon l'une des revendications 1 à 6, **caractérisé en ce que** la température de la solution d'attaque avant l'ajout de la solution de peroxyde d'hydrogène va de 50 à 90°C.

8. Procédé selon la revendication 7, **caractérisé en ce que** la température de la solution d'attaque avant l'ajout de la solution de peroxyde d'hydrogène va de 60 à 80°C.
